# EUROPEAN PATENT APPLICATION

(11) **EP 2 775 243 A1**
(43) Date of publication of application: **10.09.2014**
(21) Application number: 12822835.0
(22) Date of filing: 10.08.2012
(51) Int. Cl.: F28D 1/02, F28D 1/00, F24D 17/02, F24D 17/00

(54) **SANITATION COMPARTMENT FOR RECOVERING THE HEAT FROM HOT WASTEWATER DURING BATHING**

(30) Priority: 11.08.2011 BR PI1104063; 03.08.2012 BR 132012019493
(71) Applicant: Brucoli, Fernando Augusto Purchio, 06710-815 São Paulo (BR)
(72) Inventor: Brucoli, Fernando Augusto Purchio, 06710-815 São Paulo (BR)
(74) Representative: Carvajal y Urquijo, Isabel
(86) International application number: PCT/BR2012/000279
(87) International publication number: WO 2013/020191

(57) **Abstract**

The present invention relates to a sanitation compartment capable of preheating the clean, cold water from the mains, for use in the bath, using, for this purpose, the residual heat present in wastewater. The water used in the bath (SQ) is collected from the cabinet (1), passing via the drain (3) and is conveyed to the collector vessel (2). After heat has been transferred to the heat exchangers (8 and 11 A), the water continues on to the discharge pipe (7), via the siphon (6). The clean, cold (LF) water from the mains (9) circulates through the interior of the heat exchanger (8), where it is preheated on receiving heat from the wastewater (SQ) present within the collector vessel (2). Next, said preheated water (LQ) follows on through the exit pipe (10) to a heater or mixer of the installation, in order to be used in the bath. A heat pump (11), constituted by the cooler (11A), by the compressor (11B), by the heater (11C) and by the expander (11D), assists in the recovery of the remaining heat still present in the wastewater after passage thereof through the heat exchanger (8), transferring said heat to the water passing through the exit pipe (10) via the heater (11C).

## Description

### FIELD OF APPLICATION

The invention relates to the field of application of goods connected with civil construction, its aim being the utilization of the heat from wastewater for preheating the clean, cold water from the mains for use in bathing, providing a substantial saving in terms of the thermal energy required by the heater of the installation in order to obtain the required use temperature, by means of elements that are easy to clean and to maintain.

### PRIOR ART

A number of systems currently exist that reutilize the heat of water dispensed by a shower, as is the case of the patent documents listed below, which, however, owing to one or more of the following design defects, do not even make it as far as production: structural complexity, high production costs, low efficiency, deficient ergonomics, maintenance problems, etc.

Patent document MU 6601585, filed on 5 September 1986, entitled "Compartment for bath with heat regeneration", teaches a unit that aims to regenerate the residual energy still present in the used water, which avoids losses of energy to the external environment, making a substantial saving in terms of electrical or other energy used in heating the clean water for the bath. The compartment for a bath developed is constituted by a door, walls, ceiling and floor, which are made from heat-insulating material, the floor including a receptacle for capturing the wastewater and being thermally insulated from the environment by means of a chamber, which houses a heat exchanger and a hydraulic pump, the interior of the compartment including a pipe for conveying clean water, containing a flow-adjustment valve, a heater, actuated by electricity or another energy source, and an ejector.

Patent document MU 7302301-9, filed on 11 November 1993, entitled "Used water heat recovery device", teaches equipment for recovering heat from used water from a heating device. The recovery device developed is constituted by a coil arranged inside a siphon where the used water from a heating device is collected, said coil being interconnected to the water-supply pipe prior to said heating device.

As may be seen, and as is known especially to those skilled in the art, such systems are very limited in terms of practical application, either on account of their structural complexity and consequent high production cost, through the need for pressurizers to guarantee a satisfactory heat exchange, with no provision for cleaning and maintenance resources, or, furthermore, owing to the problems involved in their installation. Evidence of this is the fact that such devices have never entered production.

Given the aforesaid, over the years studies have been conducted with a view to eliminating said design defects and, as a result, the present sanitation compartment for recovering the heat from hot wastewater during bathing was developed as a system that incorporates various advantages in a single whole, with genuine possibilities of cost-effective industrial production, with production costs, installation time and manpower expenditure being minimized, and, also, with a high degree of efficiency, ease of cleaning and maintenance, optimum results and a high safety level.

The present invention relates to a novel sanitation compartment for recovering the heat from hot wastewater during bathing, and in particular a system for utilizing the heat from used water for preheating the clean, cold water from the mains for use in bathing, providing a substantial saving in terms of the thermal energy required by the heater of the installation in order to obtain the required use temperature, the present compartment being of innovative design and provided with significant technological and functional improvements, in accordance with the most up-to-date engineering concepts and in accordance with required standards and specifications, and having specific characteristics compliant with basic requirements in respect of novelty and inventive step, the result being a series of genuine, extraordinary technical, practical and financial advantages.

### BRIEF DESCRIPTION OF THE INVENTION

The subject of the present invention is a sanitation compartment that is capable of preheating the clean, cold water from the mains for direction to a through-heater or for mixing with hot water in order for its temperature to be adjusted, thereby providing a substantial saving in terms of the thermal energy consumed in order to obtain the required bathing temperature.

### BRIEF DESCRIPTION OF THE FIGURES

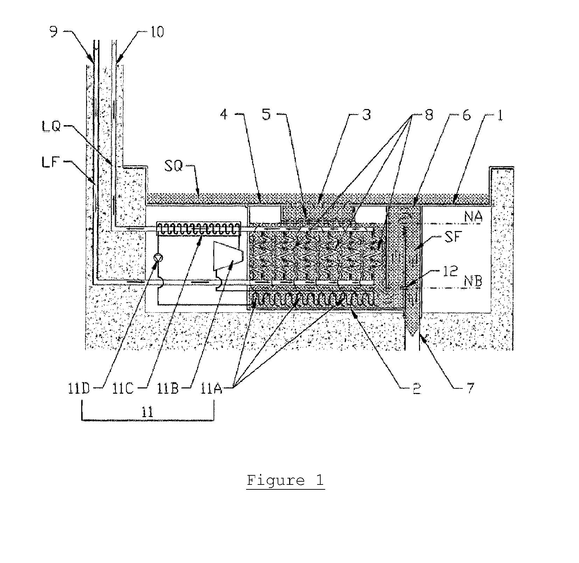

Figure 1 is a schematic representation in simplified lateral sectional view of the sanitation compartment for recovering the heat from hot wastewater during bathing.

### DETAILED DESCRIPTION OF THE INVENTION

As may be seen, in Figure 1 (in simplified lateral section), the sanitation compartment that is the subject of the present invention is constituted by a cabinet (1), made from heat-insulating material, of variable dimensions and formats, provided, in its lower portion, with a collector vessel (2) with which the cabinet communicates via a drain (3) located in a cover (4) and via a filter (5), below the drain, the vessel in turn being associated with a siphon (6) connected to the discharge pipe (7), this compartment being characterized in that said collector vessel (2) contains, within, a heat exchanger (8) connected by one of its terminals to the pipe (9) for clean, cold water (LF) from the mains and, via its opposite terminal, to the exit pipe (10) for clean water, which is now hot, for direction to a heater or mixer.

According to the invention, the cabinet (1) of the sanitation compartment collects and directs, to the collector vessel (2) via the drain (3) and the filter (5), the used water (SQ) that is still hot from the bath, circulating said water through the heat exchanger (8) before it is discharged, now cold (SF), in the discharge pipe (7) via the siphon (6), the principal function of which is to always keep the collector vessel (2) filled with water, guaranteeing complete, permanent immersion of the heat exchanger (8) when the compartment is being used, thereby preheating the clean, cold water (LF) from the mains that enters the heat exchanger via the inlet pipe (9) and is directed, now hot (LQ), via the exit pipe (10) to the heater or mixer of the installation, in order then to be used in the bath.

The present invention also discloses a heat pump (11) that transfers heat from the used water that has already been cooled by the heat exchanger (8) to the clean water that has already been preheated in that exchanger (8), and which operates with fluid that may either be a coolant fluid, for example ammonia, or a gas, for example air.

Thus, the heat pump (11) removes, from the used water that has already been cooled by the heat exchanger (8), the heat still remaining therein via the cooler (11A) located inside the vessel (2) under the heat exchanger (8). Inside the cooler (11A), the fluid is at low temperature and pressure and, after absorbing heat from the used water, passes via the compressor (11B) where the pressure and temperature thereof are raised. This fluid, at high temperature and pressure, next passes through the heater (11C), then yielding more heat to the clean water already heated by the heat exchanger (8). Lastly, the working fluid, upon leaving the heater (11C) after having yielded heat to the clean water, passes via the expander (11D), which may be an expansion valve, a small turbine or a small pneumatic motor, where it undergoes a further drop in pressure and temperature, then being conveyed back to the cooler (11A) to the start of the cycle.

Within the context of the present description, "low temperature" is understood to mean a temperature below the temperature of the cold used water but above the temperature which causes freezing around the cooler (11A); "low pressure" is understood to mean the pressure required to achieve the chosen low temperature, between customary values for the chosen working fluid; "high temperature" is understood to mean a temperature above the temperature of the hot used water (SQ) but below a temperature that might be prejudicial to the constituent materials of the heater (11C) or of the expander (11D); and "high pressure" is understood to mean the pressure needed to achieve the chosen high temperature, between limits tolerated by the components of the heater (11C) and the expander (11D).

The association of the heat pump (11) with the heat exchanger (8) gives this compartment ample capacity to recover heat, adding, to the passive heat exchange (without consumption of external energy) in the exchanger (8), the active exchange of heat of the pump (11) with a very low energy consumption, since the principle of the heat pump is highly efficient for heating applications, in particular if the expander is of the turbine or motor type, when, in addition, the work of fluid expansion is utilized for a certain purpose, such as reducing the external energy consumed by the compressor or powering a unit for pressurizing the bath water if needed.

The vessel (2) is provided, furthermore, with a mini overflow pipe (12), which establishes communication between the vessel (2) and the exit from the siphon (6), and it is located at a height between the heat exchanger (8) and the cooler (11A), allowing, however, a very small vacuum such that, when bathing starts, only the cooler (11A) is immersed in water, brought to the low level (NB) by the outflow provided by this mini overflow pipe (12) a few minutes after the most recent utilization of the compartment, the heat exchanger (8) thus being initially in the dry portion of the vessel, above the level (NB). During use, as the actual flow of the bath is excessive as compared with the outflow capacity of the mini overflow pipe (12), the vessel fills rapidly up to the high level (NA) determined by the siphon (6), immersing the heat exchanger (8) in hot used water (SQ).

The height of the mini overflow pipe (12), establishing the low level (NB), located precisely between the exchanger (8) and the cooler (11A), fulfills the important function of reducing the reaction time of the compartment to practically zero, on the one hand by keeping the cooler (11A) permanently immersed in water, from which this cooler (11A) removes heat during the initial moments after the system has been activated, and, on the other, by the exchanger (8) not initially being surrounded by cold water, there being, therefore, no mixing of hot used water (SQ) with cold water remaining from the most recent bath.

In the absence of the mini overflow pipe (12), the vessel (2) would, at the start of bathing, be filled with cold water up to the high level (NA), and this water, mixed with the hot used water (SQ), would delay the action of the heat exchanger, causing the compartment user to have to wait longer until the required temperature is achieved, which would, furthermore, consume more water at the time of each use.

Furthermore, by the mini overflow pipe (12) being located above or below the position specifically indicated between the heat exchanger (8) and the cooler (11A), there would be a greater delay in actuation of the compartment the further away the mini overflow pipe (12) was located from said position: in the first case (above the position), because the vessel (2) is progressively filled with cold water at the start of bathing, as already described, and, in the second case (below the position), because the cooler (11A) becomes progressively dry at the start of use, preventing it from removing heat from the water at ambient temperature from the outset. Thus, not only the existence of the mini overflow pipe (12) but also its flow limitation and precise position at a height between the heat exchanger (8) and the cooler (11A) are distinctive features of the present invention.

The filter (5) located below the drain (3) fulfills the important function of preventing detritus becoming deposited in the vessel (2), in the heat exchanger (8) and in the cooler (11A), thereby maintaining the efficiency of the device and the free outflow of used water, including via the siphon (6).

The cover (4), located in the bottom of the cabinet (1) and over the collector vessel (2), provides access through the side of the cabinet to the components that occupy the internal volume of the vessel (2) (filter (5), heat exchanger (8) and cooler (11A)), making the procedures of cleaning and maintenance that might be required more practicable.

Owing to the role played by the siphon (6), and also the existence of the cover (4) and the filter (5) for cleaning and maintenance, this compartment dispenses with any type of pump or device for pressurizing the used water, either to guarantee the efficient exchange of heat or to ensure the outflow of the used water.

The structure of the sanitation compartment results in free space over the cabinet (1) and around the vessel (2) for the installation of any through-heaters that might be required, and also allows access via the sides for procedures of installing and maintaining the inlet (9) and exit (10) pipes for clean water and the components of the heat pump (11) (compressor (11B), heater (11C) and expander (11D)).

No sanitation compartment for recovering the heat from hot wastewater during bathing is known that, jointly, combines all the structural and functional features mentioned above and which directly or indirectly is or has been as efficient as the unit that is the subject of the present patent.

The present invention having been described and illustrated, it should be understood that it may undergo countless modifications and variations in terms of its embodiment, provided such modifications and variations do not depart from the spirit and scope of the invention as defined in the claims.

## Claims

1. A sanitation compartment for recovering the heat from hot wastewater during bathing, **characterized in that** it comprises: a cabinet (1) made from heat-insulating material, a collector vessel (2), a drain (3) located in a cover (4), a filter (5), a siphon (6), a heat exchanger (8), a heat pump (11) comprising a cooler (11A), a compressor (11B), a heater (11C) and an expander (11D), and a mini overflow pipe (12).

2. The compartment as claimed in claim 1, **characterized in that** it is connected to the pipe (9) for cold water from the mains, to the exit pipe (10) for the water, which is now hot, for direction to a heater or mixer, and to the discharge pipe (7).

3. The compartment as claimed in claim 1 or 2, **characterized in that** it further comprises or is connected to a through-heater.

4. The compartment as claimed in claims 1 and 2, **characterized in that** the cabinet (1) has, in its lower portion, the collector vessel (2).

5. The compartment as claimed in claim 4, **characterized in that** the drain (3) located in a cover (4), placed in the bottom of the cabinet (1) and over the collector vessel (2), forms the communication between the cabinet (1) and the collector vessel (2) via a filter (5) located below the drain (3).

6. The compartment as claimed in claim 1, **characterized in that** the collector vessel (2) is associated with a siphon (6) connected to the discharge pipe (7).

7. The compartment as claimed in claims 1 and 2, **characterized in that** the collector vessel (2) contains, within, a heat exchanger (8) connected by one of its terminals to the pipe (9) for clean, cold water (LF) from the mains and, via its opposite terminal, to the exit pipe (10) for clean water, which is now hot, for direction to a heater or mixer.

8. The compartment as claimed in claim 5, **characterized in that** the cabinet (1) of the sanitation compartment collects and directs, to the collector vessel (2) via the drain (3) and the filter (5), the used water that is still hot (SQ) from the bath.

9. The compartment as claimed in claims 6, 7 and 8, **characterized in that** the used water that is still hot (SQ) from the bath circulates through the heat exchanger (8) before being discharged as cold water (SF) in the discharge pipe (7) via the siphon (6).

10. The compartment as claimed in claim 9, **characterized in that** the siphon (6) always keeps the collector vessel (2) filled with water and guarantees complete, permanent immersion of the heat exchanger (8) when the compartment is being used.

11. The compartment as claimed in claim 1, **characterized in that** the heat pump (11) operates cyclically with coolant fluid or air.

12. The compartment as claimed in claims 1 and 11, **characterized in that** the cooler (11A) of the heat pump (11) located inside the vessel (2) under the heat exchanger (8) contains working fluid at low temperature and pressure and removes the remaining heat in the used water that has already been cooled by the heat exchanger (8).

13. The compartment as claimed in claim 12, **characterized in that** the compressor (11B) raises the pressure and the temperature of the working fluid.

14. The compartment as claimed in claim 13, **characterized in that**, in the heater (11C), the working fluid at high temperature and pressure yields more heat to the clean water already heated by the heat exchanger (8).

15. The compartment as claimed in claim 14, **characterized in that** the working fluid undergoes a drop in pressure and temperature in the expander (11D) and returns to the cooler (11A) at low temperature and pressure.

16. The compartment as claimed in claim 15, **characterized in that** the expander (11D) is an expansion valve, a turbine or a pneumatic motor.

17. The compartment as claimed in claim 1, **characterized in that** the mini overflow pipe (12) establishes communication between the vessel (2) and the outlet from the siphon (6) at a height between the heat exchanger (8) and the cooler (11A).

18. The compartment as claimed in claim 17, **characterized in that** the mini overflow pipe (12) allows, at the start of use of the compartment, the cooler (11A) to be immersed in water, below the low level (NB), the heat exchanger (8) initially being in the dry portion of the vessel, above the low level (NB).

19. The compartment as claimed in claims 10 and 18, **characterized in that**, during use, the vessel (2) fills up to the high level (NA) established by the siphon (6) and the heat exchanger (8) is immersed in hot used water (SQ).

20. The compartment as claimed in claims 1 and 5, **characterized in that** the filter (5) prevents detritus from being deposited in the vessel (2), in the heat exchanger (8), in the cooler (11A) and in the siphon (6).

21. The compartment as claimed in claims 1 and 5, **characterized in that** the cover (4) provides access through the side of the cabinet (1) to the filter (5), heat exchanger (8) and cooler (11A).
